# EUROPEAN PATENT APPLICATION

(11) **EP 2 685 584 A2**
(43) Date of publication of application: **15.01.2014**
(21) Application number: 13175572.0
(22) Date of filing: 08.07.2013
(51) Int. Cl.: H02J 5/00

(54) **Electronic device**

(30) Priority: 13.07.2012 JP 2012157601
(71) Applicant: Funai Electric Co., Ltd., Daito-shi, Osaka 574-0013 (JP)
(72) Inventor: Shimizu, Manabu, Daito-shi, Osaka 574-0013 (JP)
(74) Representative: Grünecker, Kinkeldey, Stockmair & Schwanhäusser

(57) **Abstract**

This electronic device (3) includes a control portion (37) receiving DC power through an AC-DC conversion portion (32a) from an AC power supply and a connection portion (31) connected to an external device (2) in a state where the connection portion can receive DC power from the external device, while the control portion is configured to perform control of stopping receiving of the DC power received by the control portion through the AC-DC conversion portion from the AC power supply when the control portion receives DC power from the external device through the connection portion in a standby state.

## Description

### BACKGROUND OF THE INVENTION

### Field of the Invention

The present invention relates to an electronic device, and more particularly, it relates to an electronic device including a control portion receiving DC power through an AC-DC conversion portion from an AC power source.

### Description of the Background Art

An electronic device including a control portion receiving DC power through an AC-DC conversion portion from an AC power supply is known in general, as disclosed in Japanese Patent Laying-Open No. 11-089116 (1999).

Japanese Patent Laying-Open No. 11-089116 discloses an electronic device including a device circuit (a control portion) receiving power through a main power supply circuit (an AC-DC conversion portion) receiving the power from a commercial power supply (an AC power supply) and a communication control portion receiving power from a host computer (an external device). This electronic device is configured to be capable of switching between stopping and receiving (restarting) of the power received by the device circuit through the main power supply circuit from the commercial power supply by controlling a relay circuit provided between the commercial power supply and the main power supply circuit with the communication control portion. In this electronic device, receiving of the power received by the device circuit through the main power supply circuit from the commercial power supply is stopped in a standby state, whereby power consumption in the main power supply circuit and the device circuit is reduced.

However, although the electronic device according to Japanese Patent Laying-Open No. 11-089116 can save power by reducing power consumption in the main power supply circuit and the device circuit in the standby state, the electronic device disadvantageously stops all functions of the device circuit due to the stopping of the power received by the device circuit (the control portion).

### SUMMARY OF THE INVENTION

The present invention has been proposed in order to solve the aforementioned problem, and an object of the present invention is to provide an electronic device capable of saving power while preventing stopping of all functions of a control portion in a standby state.

An electronic device according to an aspect of the present invention includes a control portion receiving DC power through an AC-DC conversion portion from an AC power supply and a connection portion connected to an external device in a state where the connection portion can receive DC power from the external device, while the control portion is configured to perform control of stopping receiving of the DC power received by the control portion through the AC-DC conversion portion from the AC power supply when the control portion receives DC power from the external device through the connection portion in a standby state.

In the electronic device according to the aspect of the present invention, as hereinabove described, the control portion is configured to perform control of stopping receiving of the DC power received by the control portion through the AC-DC conversion portion from the AC power supply when the control portion receives the DC power from the external device through the connection portion in the standby state, whereby when the control portion receives the DC power from the external device through the connection portion in the standby state, the power received by the control portion from the AC power supply is stopped and there is no power loss resulting from power conversion in the AC-DC conversion portion so that power consumption can be reduced. Thus, power can be saved while stoppage of all functions of the control portion is prevented in the standby state. Consequently, power can be saved while the clock function of the control portion is maintained in the standby state, for example.

In the aforementioned electronic device according to the aspect, the control portion is preferably configured to perform control of restarting receiving of the DC power received by the control portion through the AC-DC conversion portion from the AC power supply when receiving of the DC power from the external device is stopped in the standby state. According to this structure, even when receiving of the DC power from the external device is stopped, the control portion can receive the DC power through the AC-DC conversion portion from the AC power supply, and hence stoppage of all the functions of the control portion can be reliably prevented.

In this case, the electronic device preferably further includes an electric storage portion capable of storing the DC power received from the external device through the connection portion, and the control portion is preferably configured to continue to operate with the DC power stored in the electric storage portion during the period from the time point when receiving of the DC power from the external device is stopped to the time point when receiving of the DC power received by the control portion through the AC-DC conversion portion from the AC power supply is restarted in the standby state. According to this structure, even in the case where there is a time lag during the period from the time point when receiving of the DC power from the external device is stopped to the time point when receiving of the DC power received by the control portion through the AC-DC conversion portion from the AC power supply is restarted in the standby state, the control portion can continue to receive the power from the electric storage portion.

The aforementioned electronic device according to the aspect preferably further includes a changeover switch provided between the AC power supply and the AC-DC conversion portion, switching between disconnection and connection of a receiving path for the DC power received by the control portion through the AC-DC conversion portion from the AC power supply, and the control portion is preferably configured to perform control of switching the changeover switch so as to disconnect the receiving path for the DC power received by the control portion through the AC-DC conversion portion from the AC power supply when the control portion receives the DC power from the external device. According to this structure, receiving of the DC power from the external device and receiving of the power from the AC power supply can be easily switched with the changeover switch.

The aforementioned electronic device according to the aspect preferably further includes a signal receiving portion receiving DC power through the AC-DC conversion portion from the AC power supply, capable of receiving a signal from a remote controller, and the control portion is preferably configured to perform control of stopping receiving of the DC power received by the control portion and the signal receiving portion through the AC-DC conversion portion from the AC power supply when the control portion and the signal receiving portion receive the DC power from the external device through the connection portion in the standby state. According to this structure, not only the control portion but also the signal receiving portion can receive the DC power from the external device in the standby state, and hence there is no power loss resulting from power conversion in the AC-DC conversion portion so that power consumption can be reduced and power can be saved, while receiving of the power by the control portion and the signal receiving portion in the standby state is ensured.

In the aforementioned electronic device according to the aspect, the control portion is preferably configured to continue at least time-related control with the DC power received from the external device when the control portion receives the DC power from the external device through the connection portion in the standby state. According to this structure, power can be saved while time-related functions such as time display, a timer, etc. are maintained.

The aforementioned electronic device according to the aspect preferably further includes a transformation portion provided between the AC power supply and the control portion, transforming a DC voltage, and the control portion is preferably configured to perform control of stopping receiving of the DC power received by the control portion through the transformation portion from the AC power supply when the control portion receives the DC power from the external device through the connection portion in the standby state. According to this structure, there is no power loss resulting from power conversion in the transformation portion when the control portion receives the DC power from the external device through the connection portion in the standby state, and hence power can be easily saved.

In this case, the AC-DC conversion portion and the transformation portion are preferably arranged in series to configure a power supply circuit portion, the power supply circuit portion is preferably provided between the AC power supply and the control portion, and the control portion is preferably configured to perform control of stopping receiving of the DC power received by the control portion through the power supply circuit portion from the AC power supply when the control portion receives the DC power from the external device through the connection portion in the standby state. According to this structure, there is no power loss resulting from power conversion in the power supply circuit portion including the AC-DC conversion portion and the transformation portion when the power received by the control portion from the AC power supply is stopped, and hence power consumption can be easily reduced.

In the aforementioned electronic device according to the aspect, the connection portion connectable to the external device is preferably configured to be connected by a prescribed cable capable of transmitting audio data, video data, a control signal, and power and to comply with the interface standard allowing mutual control between devices based on the control signal. According to this structure, the control portion can easily receive the DC power from the external device by simply connecting the prescribed cable capable of transmitting audio data, video data, a control signal, and power to the connection portion complying with the interface standard allowing mutual control between devices based on the control signal.

In this case, the connection portion is preferably configured to comply with the HDMI standard as the interface standard. According to this structure, the control portion can receive the DC power from the external device by simply connecting the HDMI cable to the connection portion complying with the HDMI standard.

In the aforementioned electronic device according to the aspect, the control portion preferably includes a port connected to the connection portion through a wire and is preferably configured to determine that the control portion receives the DC power from the external device by detecting that the DC power is supplied to the port. According to this structure, the control portion can easily detect that the control portion receives the DC power from the external device through the connection portion with the port.

In the aforementioned structure of further including the electric storage portion capable of storing the DC power received from the external device through the connection portion, the electronic device preferably further includes a diode having a cathode side connected to the control portion, and a capacitor constituting the electric storage portion is preferably arranged between the diode and the control portion. According to this structure, flow of a current in a direction opposite to the control portion from the electric storage portion can be prevented, and hence the control portion can reliably receive the DC power stored in the electric storage portion.

In the aforementioned structure of further including the diode, the diode includes a first diode and a second diode, the first diode is preferably arranged between the connection portion and the control portion, the second diode is preferably arranged between the AC-DC conversion portion and the control portion, and the first diode and the second diode both preferably have cathode sides connected to the control portion. According to this structure, the first diode and the second diode can prevent flow of a current in the direction opposite to the control portion from the electric storage portion, and hence the control portion can reliably receive the DC power stored in the electric storage portion.

In the aforementioned structure of further including the signal receiving portion, the electronic device preferably further includes an electric storage portion capable of storing the DC power received from the external device through the connection portion and a diode having a cathode side connected to the control portion, the cathode side of the diode is preferably connected to the signal receiving portion, and a capacitor constituting the electric storage portion is preferably arranged between the diode and the signal receiving portion. According to this structure, flow of a current in a direction opposite to the signal receiving portion from the electric storage portion can be prevented, and hence the signal receiving portion can reliably receive the DC power stored in the electric storage portion.

In the aforementioned electronic device according to the aspect, the voltage value of a current flowing from the AC-DC conversion portion to the control portion is preferably larger than the voltage value of a current flowing from the connection portion to the control portion. According to this structure, the control portion can preferentially receive the power supplied from the AC power supply in the case where power is supplied from both the AC-DC conversion portion and the connection portion to the control portion, and hence the control portion can stably operate.

According to the present invention, as hereinabove described, power can be saved while stoppage of all the functions of the control portion is prevented in the standby state.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the structure of a video system according to an embodiment of the present invention;
Fig. 2 illustrates an HDMI cable of the video system according to the embodiment of the present invention;
Fig. 3 is a flowchart for illustrating processing for turning off a power supply circuit portion from a TV (power-on)-BD player (power-on) state in a TV of the video system according to the embodiment of the present invention;
Fig. 4 is a flowchart for illustrating processing for turning off the power supply circuit portion from a TV (standby state)-BD player (standby state) state in the TV of the video system according to the embodiment of the present invention; and
Fig. 5 is a flowchart for illustrating processing for turning on the power supply circuit portion in the TV of the video system according to the embodiment of the present invention.

### DESCRIPTION OF THE PREFERRED EMBODIMENTS

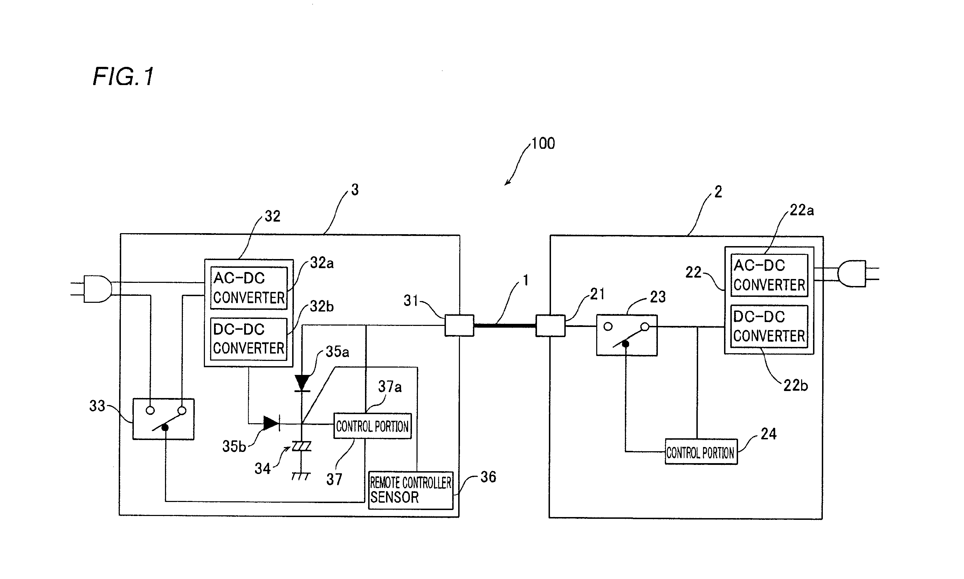

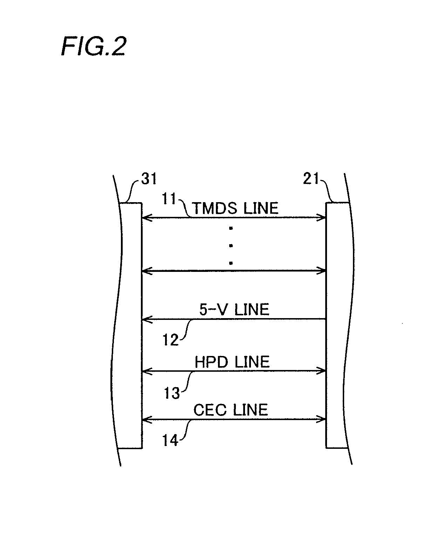

The structure of a video system 100 according to an embodiment of the present invention is now described with reference to Figs. 1 and 2.

The video system 100 according to the embodiment of the present invention includes a Blu-ray disc player (BD player) 2 and a television apparatus (TV) 3 connected to each other through an HDMI (registered trademark) (high-definition multimedia interface) cable 1, as shown in Fig. 1. The HDMI cable 1 is an example of the "prescribed cable" in the present invention. The BD player 2 is an example of the "external device" or the "recorder" in the present invention. The TV 3 is an example of the "electronic device" or the "display" in the present invention.

The HDMI cable 1 mainly includes a plurality of TMDS (transition minimized differential signaling) lines 11 capable of transmitting audio data and video data, a 5-V line (power supply (receiving) line) 12 capable of unidirectionally transmitting 5 V DC power from the BD player 2 to the TV 3, an HPD (hot plug detect) line 13 for setting the BD player 2 to be capable of transmitting a signal corresponding to the TV 3, and a CEC (consumer electronics control) line 14 capable of bi-directionally transmitting a control signal, as shown in Fig. 2. The TV 3 activates the HPD line 13 when receiving 5 V power through the 5-V line 12 from the BD player 2 in the case where the TV 3 and the BD player 2 are connected to each other. Then, the BD player 2 is set to be capable of transmitting the signal corresponding to the TV 3.

The BD player 2 mainly includes a connection portion 21 complying with the HDMI standard, a power supply circuit portion 22 having a function of converting AC power into DC power and a function of transforming a voltage, a switch 23 switching between disconnection and connection of a power receiving path, and a control portion 24 controlling whole of the BD player 2, as shown in Fig. 1. The connection portion 21 is an example of the "first connection portion" in the present invention. The HDMI standard is an example of the "interface standard" in the present invention.

The connection portion 21 is connected with one end of the HDMI cable 1, as shown in Fig. 1. The connection portion 21 is configured to be capable of supplying DC power to the TV 3 through the HDMI cable 1. In other words, the connection portion 21 is so configured that the TV 3 can receive DC power through the HDMI cable 1.

The power supply circuit portion 22 includes an AC-DC (alternating current-direct current) converter 22a converting (rectifying) AC power into DC power and a DC-DC (direction current-direct current) converter 22b transforming a DC voltage. AC power entering the power supply circuit portion 22 from an outlet is converted into DC power by the AC-DC converter 22a. The DC power into which the AC-DC converter 22a converts the AC power is transformed into a prescribed DC voltage by the DC-DC converter 22b.

The switch 23 is provided between the connection portion 21 and the power supply circuit portion 22, as shown in Fig. 1. By switching the switch 23, a DC power receiving path from the BD player 2 to the TV 3 is disconnected or connected. The control portion 24 is configured to execute switching between disconnection and connection of the switch 23. As the switch 23, a FET (field effect transistor) switch, a relay circuit, etc. can be employed.

The control portion 24 is configured to perform control of switching the switch 23 so as to connect a DC power receiving path between the power supply circuit portion 22 and the connection portion 21 when the BD player 2 is in a power-on state. The control portion 24 is configured to perform control of switching the switch 23 so as to disconnect the DC power receiving path between the power supply circuit portion 22 and the connection portion 21 when the BD player 2 is in a standby state or in a power-off state.

According to this embodiment, the TV 3 includes a connection portion 31 corresponding to the HDMI standard, a power supply circuit portion 32 having a function of converting AC power into DC power and a function of transforming a voltage, and a switch 33 switching between disconnection and connection of a power receiving path, as shown in Fig. 1. The TV 3 further includes an electrolytic capacitor 34 capable of storing charges, diodes 35a and 35b preventing backflow of current, a remote controller sensor 36 receiving a signal from a remote controller (not shown), and a control portion 37 controlling a body of the TV 3. The connection portion 21 is an example of the "second connection portion" in the present invention. The switch 33 is an example of the "changeover switch" in the present invention. The electrolytic capacitor 34 is an example of the "electric storage portion" in the present invention. The remote controller sensor 36 is an example of the "signal receiving portion" in the present invention.

The TV 3 is configured to be capable of being set to three states of a power-on state, a standby state, and a power-off state. The power-on state is a state where power is supplied to all electronic components of the TV 3. The TV 3 is configured to be set to the power-on state when a user watches a TV program, for example. The standby state is a state where power is supplied to some of the electronic components of the TV 3. Specifically, the standby state is a state where power is supplied to the remote controller sensor 36 and the control portion 37 and is not supplied to the remaining electronic components. Power is supplied to the remote controller sensor 36 and the control portion 37, so that the remote controller sensor 36 and the control portion 37 can function even in the standby state. The power-off state is a state where power is not supplied to all the electronic components of the TV 3.

The connection portion 31 is connected with the other end of the HDMI cable 1, as shown in Fig. 1. The connection portion 31 is connected to the BD player 2 in a state where the connection portion 31 can receive DC power.

The power supply circuit portion 32 is provided between an AC power supply and the control portion 37, as shown in Fig. 1. The power supply circuit portion 32 includes an AC-DC converter 32a converting AC power into DC power and a DC-DC converter 32b transforming a voltage. More specifically, the AC-DC converter 32a and the DC-DC converter 32b are arranged in series to configure the power supply circuit portion 32. AC power entering the TV 3 from an outlet is converted into DC power by the AC-DC converter 32a. The DC power into which the AC-DC converter 32a converts the AC power is transformed into a prescribed voltage value by the DC-DC converter 32b. More specifically, the voltage value into which the DC-DC converter 32b transforms the DC power is a voltage value (5.5 V, for example) larger than the DC power of 5 V received through the HDMI cable 1 from the BD player 2. When the control portion 37 and the remote controller sensor 36 do not receive DC power from the BD player 2 through the connection portion 31 in the case where the TV 3 is in the standby state, the control portion 37 and the remote controller sensor 36 receive DC power through the AC-DC converter 32a and the DC-DC converter 32b. The AC-DC converter 32a is an example of the "AC-DC conversion portion" in the present invention. The DC-DC converter 32b is an example of the "transformation portion" in the present invention.

The switch 33 is provided between the AC power supply and the power supply circuit portion 32, as shown in Fig. 1. The switch 33 is configured to switch between disconnection and connection of a receiving path for DC power received by the control portion 37 through the AC-DC converter 32a from the AC power supply. As the switch 33, a FET switch, a relay circuit, etc. can be employed.

The electrolytic capacitor 34 is configured to be capable of storing charges (power) on the basis of the DC power received from the BD player 2 through the connection portion 31, as shown in Fig. 1. The electrolytic capacitor 34 is arranged between the diodes 35a and 35b and the control portion 37. Furthermore, the electrolytic capacitor 34 is arranged between the diodes 35a and 35b and the remote controller sensor 36. One end of the electrolytic capacitor 34 is connected to the control portion 37 through a wire. The other end of the electrolytic capacitor 34 is grounded.

The diode 35a is arranged between the connection portion 31 and the control portion 37. The anode side of the diode 35a is connected to the connection portion 31 through a wire, as shown in Fig. 1. The cathode side of the diode 35a is connected to the control portion 37 and the remote controller sensor 36 through wires. Thus, a current flows from the connection portion 31 to the control portion 37. The 5 V power (DC power) supplied from the BD player 2 to the TV 3 through the 5-V line 12 is supplied to the diode 35a when the TV 3 and the BD player 2 are connected to each other. In other words, the voltage value of the current flowing from the connection portion 31 to the control portion 37 is 5 V. The diode 35a is an example of the "first diode" in the present invention.

The diode 35b is arranged between the power supply circuit portion 32 (the AC-DC converter 32a and the DC-DC converter 32b) and the control portion 37. The anode side of the diode 35b is connected to the power supply circuit portion 32 through a wire, as shown in Fig. 1. The cathode side of the diode 35b is connected to the control portion 37 and the remote controller sensor 36 through wires. Thus, a current flows from the power supply circuit portion 32 to the control portion 37. The voltage value of the current supplied from the power supply circuit portion 32 (the AC-DC converter 32a and the DC-DC converter 32b) to the control portion 37 through the diode 35b is about 5.5 V. In other words, the voltage value of the current flowing from the power supply circuit portion 32 (the AC-DC converter 32a and the DC-DC converter 32b) to the control portion 37 is larger than the voltage value of the current flowing from the connection portion 31 to the control portion 37. Thus, the current flowing from the side of the diode 35b is preferentially supplied to the control portion 37 when power is supplied to both the diode 35a and the diode 35b. When the TV 3 is in the power-on state and the BD player 2 is in the power-on state, power is supplied to the diode 35a and the diode 35b. The diode 35b is an example of the "second diode" in the present invention.

The remote controller sensor 36 is configured to be capable of receiving the signal of the remote controller, as shown in Fig. 1. The remote controller sensor 36 is connected to the control portion 37 through a wire. Furthermore, the remote controller sensor 36 is configured to transmit the signal received from the remote controller to the control portion 37. The remote controller sensor 36 is configured to receive DC power through the power supply circuit portion 32 from the AC power supply in a state where the DC power is transformed into the prescribed voltage value. The voltage value of a current received by the remote controller sensor 36 through the diode 35b from the power supply circuit portion 32 is about 5.5 V. The remote controller sensor 36 is configured to be capable of receiving DC power from the BD player 2 through the connection portion 31. The voltage value of a current received by the remote controller sensor 36 through the diode 35a from the side of the connection portion 31 is about 5 V. Thus, the remote controller sensor 36 preferentially receives the current flowing from the side of the diode 35b when power is supplied to both the diode 35a and the diode 35b. When the TV 3 is in the power-on state and the BD player 2 is in the power-on state, power is supplied to the diode 35a and the diode 35b. The remote controller sensor 36 is configured to be operable from the charges stored in the electrolytic capacitor 34. As the remote controller sensor 36, a sensor including an IC (integrated circuit) or the like can be employed.

The control portion 37 is configured to have a clock function. The control portion 37 is configured to perform time-related control of the TV 3 (time display, a record start trigger, etc., for example) by a timer function. The control portion 37 is configured to continue at least the time-related control with the DC power received from the BD player 2 when the control portion 37 receives the DC power from the BD player 2 through the connection portion 31 in the case where the TV 3 is in the standby state. Furthermore, the control portion 37 is configured to receive the DC power through the power supply circuit portion 32 from the AC power supply in a state where the DC power is transformed into the prescribed voltage value. The control portion 37 is configured to receive the DC power from the BD player 2 through the HDMI cable 1. In other words, the control portion 37 is configured to be operable with the DC power received through the AC-DC converter 32a and the DC-DC converter 32b or the DC power received from the BD player 2 through the HDMI cable 1. The control portion 37 includes a port 37a connected to the connection portion 31 through a wire. The control portion 37 is configured to be capable of determining that the control portion 37 receives the DC power from the BD player 2 by detecting that the power is supplied to the port 37a when 5 V power is supplied from the BD player 2 to the TV 3 through the HDMI cable 1.

Control performed by the control portion 37 when the TV 3 is in the standby state is now described. The control portion 37 performs control of stopping receiving of the DC power received by the control portion 37 through the power supply circuit portion 32 from the AC power supply when the control portion 37 receives the DC power from the BD player 2 through the connection portion 31. At this time, the control portion 37 disconnects the receiving path for the DC power received by the control portion 37 through the power supply circuit portion 32 from the AC power supply by performing control of switching the switch 33. Furthermore, the control portion 37 performs control of stopping receiving of the DC power received by the remote controller sensor 36 through the power supply circuit portion 32 from the AC power supply when the remote controller sensor 36 receives the DC power from the BD player 2 through the connection portion 31. At this time, the control portion 37 disconnects a receiving path for the DC power received by the remote controller sensor 36 through the power supply circuit portion 32 from the AC power supply by performing control of switching the switch 33.

The control portion 37 performs control of restarting receiving of the DC power received by the control portion 37 through the power supply circuit portion 32 from the AC power supply when receiving of the DC power from the BD player 2 is stopped. The control portion 37 continues to operate with the power stored in the electrolytic capacitor 34 during the period from the time point when receiving of the DC power from the BD player 2 is stopped to the time point when receiving of the DC power received by the control portion 37 through the power supply circuit portion 32 from the AC power supply is restarted (within one second, for example).

Furthermore, the control portion 37 performs control of restarting receiving of the DC power received by the remote controller sensor 36 through the power supply circuit portion 32 from the AC power supply when receiving of the DC power from the BD player 2 is stopped. The control portion 37 continues to operate with the power stored in the electrolytic capacitor 34 during the period from the time point when receiving of the DC power from the BD player 2 is stopped to the time point when receiving of the DC power received by the remote controller sensor 36 through the power supply circuit portion 32 from the AC power supply is restarted (within one second, for example).

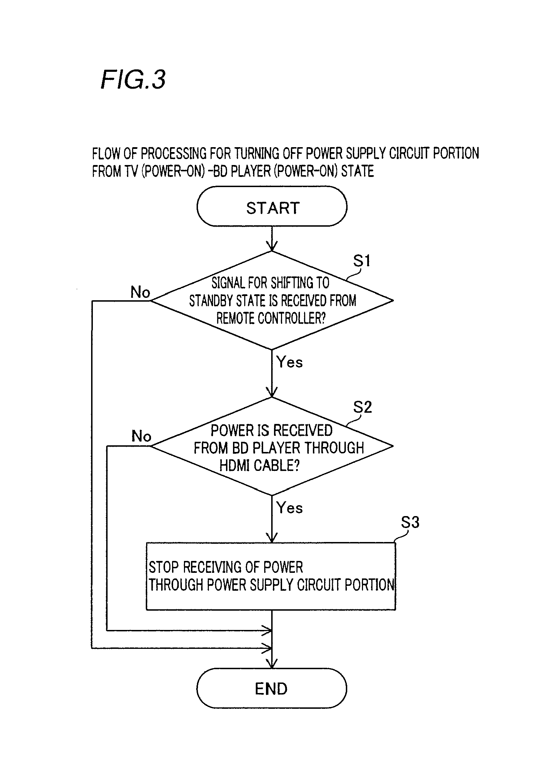

Processing for turning off the power supply circuit portion from a TV (power-on)-BD player (power-on) state performed by the control portion 37 of the TV 3 in the video system 100 according to this embodiment is now described with reference to Fig. 3. The processing for turning off the power supply circuit portion in Fig. 3 is started from a state where the TV 3 is in the power-on state and the BD player 2 is in the power-on state. This processing for turning off the power supply circuit portion from the TV (power-on)-BD player (power-on) state is repeated even after the processing has once been terminated.

First, the control portion 37 determines whether or not a signal for shifting to the standby state is received from the remote controller at a step S1. When determining that the signal for shifting to the standby state is received from the remote controller at the step S1, the control portion 37 advances to a step S2. When determining that the signal for shifting to the standby state is not received from the remote controller, the control portion 37 terminates the processing for turning off the power supply circuit portion from the TV (power-on)-BD player (power-on) state.

At the step S2, the control portion 37 determines whether or not power is received from the BD player 2 through the HDMI cable 1. Specifically, the control portion 37 determines that power is received from the BD player 2 by detecting that 5 V power is supplied from the BD player 2 to the port 37a. When determining that power is received from the BD player 2 through the HDMI cable 1 at the step S2, the control portion 37 advances to a step S3. When determining that power is not received from the BD player 2 through the HDMI cable 1, the control portion 37 terminates the processing for turning off the power supply circuit portion from the TV (power-on)-BD player (power-on) state.

At the step S3, the control portion 37 stops receiving of power to the control portion 37 and the remote controller sensor 36 through the power supply circuit portion 32, and the control portion 37 and the remote controller sensor 36 receive power through the HDMI cable 1 from the BD player 2. Thereafter, the control portion 37 terminates the processing for turning off the power supply circuit portion from the TV (power-on)-BD player (power-on) state.

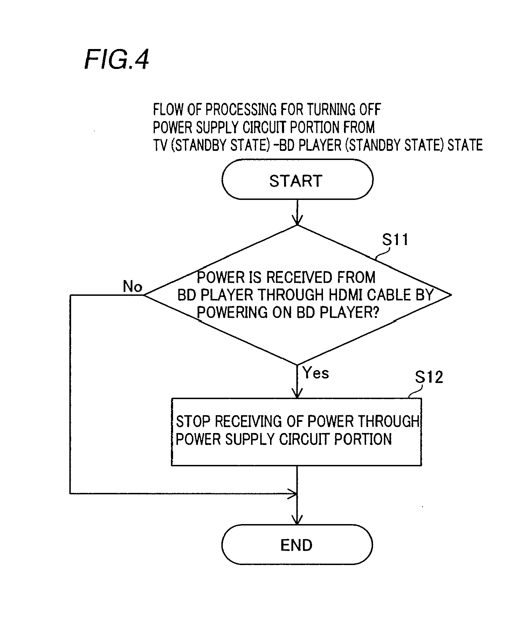

Processing for turning off the power supply circuit portion from a TV (standby state)-BD player (standby state) state performed by the control portion 37 of the TV 3 in the video system 100 according to this embodiment is now described with reference to Fig. 4. The processing for turning off the power supply circuit portion from the TV (standby state)-BD player (standby state) state in Fig. 4 is started from a state where the TV 3 is in the standby state and the BD player 2 is in the standby state, unlike the processing for turning off the power supply circuit portion from the TV (power-on)-BD player (power-on) state in Fig. 3. This processing for turning off the power supply circuit portion from the TV (standby state)-BD player (standby state) state is repeated even after the processing has once been terminated.

First, the control portion 37 determines whether or not power is received from the BD player 2 through the HDMI cable 1 by powering on the BD player 2 at a step S11. Specifically, the control portion 37 determines that power is received from the BD player 2 by detecting that 5 V power is supplied from the BD player 2 to the port 37a. When determining that power is received from the BD player 2 through the HDMI cable 1 at the step S11, the control portion 37 advances to a step S12. When determining that power is not received from the BD player 2 through the HDMI cable 1, the control portion 37 terminates the processing for turning off the power supply circuit portion from the TV (standby state)-BD player (standby state) state.

At the step S12, the control portion 37 stops receiving of power to the control portion 37 and the remote controller sensor 36 through the power supply circuit portion 32. Thereafter, the control portion 37 terminates the processing for turning off the power supply circuit portion from the TV (standby state)-BD player (standby state) state.

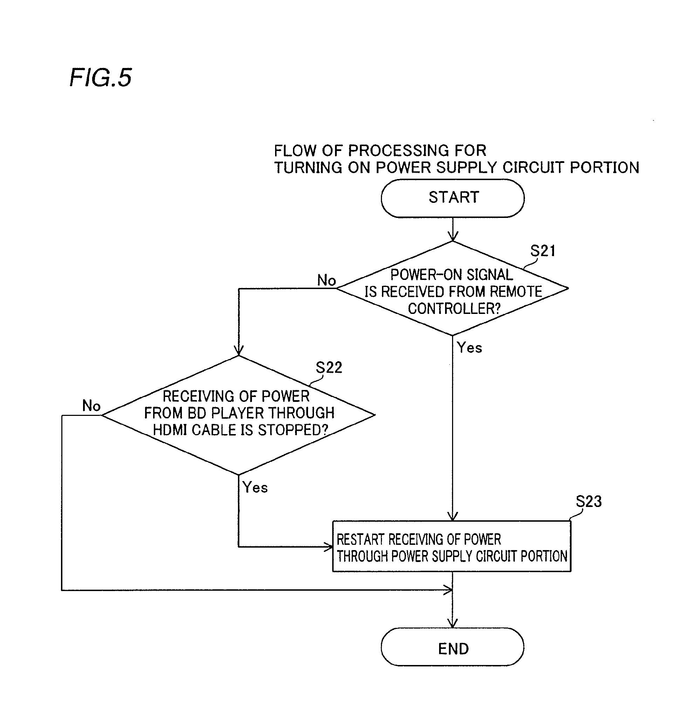

Processing for turning on the power supply circuit portion performed by the control portion 37 of the TV 3 in the video system 100 according to this embodiment is now described with reference to Fig. 5. The processing for turning on the power supply circuit portion in Fig. 5 is started from a state where the TV 3 is in the standby state and the BD player 2 is in the power-on state. This processing for turning on the power supply circuit portion is repeated even after the processing has once been terminated.

First, the control portion 37 determines whether or not a signal for powering on the TV 3 is received from the remote controller at a step S21. When determining that the signal for powering on the TV 3 is received from the remote controller at the step S21, the control portion 37 advances to a step S23. When determining that the signal for powering on the TV 3 is not received from the remote controller, the control portion 37 advances to a step S22.

At the step 22, the control portion 37 determines whether or not receiving of power from the BD player 2 through the HDMI cable 1 is stopped. Specifically, the control portion 37 determines that receiving of power from the BD player 2 is stopped when 5 V power supplied from the BD player 2 to the port 37a is no longer detected. When determining that the control portion 37 and the remote controller sensor 36 stop receiving power from the BD player 2 through the HDMI cable 1 at the step S22, the control portion 37 advances to the step S23. At this time, operations continue with the power stored in the electrolytic capacitor 34 during the period from the time point when receiving of DC power to the control portion 37 and the remote controller sensor 36 from the BD player 2 is stopped to the time point when receiving of the DC power received by the control portion 37 and the remote controller sensor 36 through the AC-DC converter 32a from the AC power supply is restarted. When determining that the control portion 37 and the remote controller sensor 36 do not stop receiving power from the BD player 2 through the HDMI cable 1 at the step S22, the control portion 37 terminates the processing for turning on the power supply circuit portion.

At the step S23, power supply to the control portion 37 and the remote controller sensor 36 through the power supply circuit portion 32 is restarted. Thereafter, the control portion 37 terminates the processing for turning on the power supply circuit portion.

According to this embodiment, as hereinabove described, the control portion 37 of the TV 3 is configured to perform control of stopping receiving of the DC power received by the control portion 37 through the AC-DC converter 32a from the AC power supply when the control portion 37 receives the DC power from the BD player 2 through the connection portion 31 in the standby state. Thus, when the control portion 37 receives the DC power from the BD player 2 through the connection portion 31 in the case where the TV 3 is in the standby state, the power received by the control portion 37 from the AC power supply is stopped and there is no power loss resulting from power conversion in the AC-DC converter 32a so that power consumption can be reduced. Thus, even in the case where the TV 3 is in the standby state, power can be saved in the video system 100 while stoppage of all functions of the control portion 37 of the TV 3 is prevented. Consequently, power can be saved while the clock function of the control portion 37 is maintained.

According to this embodiment, as hereinabove described, the control portion 37 is configured to perform control of restarting receiving of the DC power received by the control portion 37 through the AC-DC converter 32a from the AC power supply when receiving of the DC power from the BD player 2 is stopped in the standby state. Thus, even when receiving of the DC power from the BD player 2 is stopped, the control portion 37 can receive the DC power through the AC-DC converter 32a from the AC power supply, and hence stoppage of all the functions of the control portion 37 can be reliably prevented.

According to this embodiment, as hereinabove described, the electrolytic capacitor 34 capable of storing the DC power received from the BD player 2 through the connection portion 31 is further provided, and the control portion 37 is configured to continue to operate with the power stored in the electrolytic capacitor 34 during the period from the time point when receiving of the DC power from the BD player 2 is stopped to the time point when receiving of the DC power received by the control portion 37 through the AC-DC converter 32a from the AC power supply is restarted in the standby state. Thus, even in the case where there is a time lag during the period from the time point when receiving of the DC power from the BD player 2 is stopped to the time point when receiving of the DC power received by the control portion 37 through the AC-DC converter 32a from the AC power supply is restarted in the standby state, the control portion 37 can continue to receive the power from the electrolytic capacitor 34.

According to this embodiment, as hereinabove described, the switch 33 provided between the AC power supply and the AC-DC converter 32a, switching between disconnection and connection of the receiving path for the DC power received by the control portion 37 through the AC-DC converter 32a from the AC power supply is further provided, and the control portion 37 is configured to perform control of switching the switch 33 so as to disconnect the receiving path for the DC power received by the control portion 37 through the AC-DC converter 32a from the AC power supply when the control portion 37 receives the DC power from the BD player 2. Thus, receiving of the DC power from the BD player 2 and receiving of the power from the AC power supply can be easily switched with the switch 33.

According to this embodiment, as hereinabove described, the remote controller sensor 36 receiving the power through the AC-DC converter 32a from the AC power supply, capable of receiving the signal from the remote controller is further provided, and the control portion 37 is configured to perform control of stopping receiving of the DC power received by the control portion 37 and the remote controller sensor 36 through the AC-DC converter 32a from the AC power supply when the control portion 37 and the remote controller sensor 36 receive the DC power from the BD player 2 through the connection portion 31 in the standby state. Thus, not only the control portion 37 but also the remote controller sensor 36 can receive the DC power from the BD player 2 in the standby state, and hence there is no power loss resulting from power conversion in the AC-DC converter 32a so that power consumption can be reduced and power can be saved, while receiving of the power by the control portion 37 and the remote controller sensor 36 in the standby state is ensured.

According to this embodiment, as hereinabove described, the control portion 37 is configured to continue the time-related control with the DC power received from the BD player 2 when the control portion 37 receives the DC power from the BD player 2 through the connection portion 31 in the standby state. Thus, power can be saved while time-related functions such as time display, a timer, etc. are maintained.

According to this embodiment, as hereinabove described, the DC-DC converter 32b provided between the AC power supply and the control portion 37, transforming the DC voltage is further provided, and the control portion 37 is configured to perform control of stopping receiving of the DC power received by the control portion 37 through the DC-DC converter 32b from the AC power supply when the control portion 37 receives the DC power from the BD player 2 through the connection portion 31 in the standby state. Thus, there is no power loss resulting from power conversion in the DC-DC converter 32b when the control portion 37 receives the DC power from the BD player 2 through the connection portion 31 in the standby state, and hence power can be easily saved.

According to this embodiment, as hereinabove described, the AC-DC converter 32a and the DC-DC converter 32b are arranged in series to configure the power supply circuit portion 32, the power supply circuit portion 32 is provided between the AC power supply and the control portion 37, and the control portion 37 is configured to perform control of stopping receiving of the DC power received by the control portion 37 through the power supply circuit portion 32 from the AC power supply when the control portion 37 receives the DC power from the BD player 2 through the connection portion 31 in the standby state. Thus, there is no power loss resulting from power conversion in the power supply circuit portion 32 including the AC-DC converter 32a and the DC-DC converter 32b when the power received by the control portion 37 from the AC power supply is stopped, and hence power consumption can be easily reduced.

According to this embodiment, as hereinabove described, the connection portion 31 connectable to the BD player 2 is configured to be connected by the HDMI cable 1 capable of transmitting audio data, video data, a control signal, and power and to comply with the HDMI standard allowing mutual control between devices based on the control signal. Thus, the control portion 37 can easily receive the DC power from the BD player 2 by simply connecting the HDMI cable 1 capable of transmitting audio data, video data, a control signal, and power to the connection portion 31 complying with the HDMI standard allowing mutual control between devices based on the control signal.

According to this embodiment, as hereinabove described, the connection portion 31 is configured to comply with the HDMI standard as an interface standard. Thus, the control portion 37 can receive the DC power from the BD player 2 by simply connecting the HDMI cable 1 to the connection portion 31 complying with the HDMI standard.

According to this embodiment, as hereinabove described, the control portion 37 includes the port 37a connected to the connection portion 31 through the wire and is configured to determine that the control portion 37 receives the DC power from the BD player 2 by detecting that the power is supplied to the port 37a. Thus, the control portion 37 can easily detect that the control portion 37 receives the DC power from the BD player 2 through the connection portion 31 with the port 37a.

According to this embodiment, as hereinabove described, the diodes 35a and 35b having cathode sides connected to the control portion 37 are provided, and the electrolytic capacitor 34 is provided between the diodes 35a and 35b and the control portion 37. Thus, the control portion 37 can reliably receive the power stored in the electrolytic capacitor 34.

According to this embodiment, as hereinabove described, the diode 35a is provided between the connection portion 31 and the control portion 37, the diode 35b is provided between the AC-DC converter 32a and the control portion 37, and the diodes 35a and 35b both have the cathode sides connected to the control portion 37. Thus, the control portion 37 can reliably receive the power stored in the electrolytic capacitor 34 by the diodes 35a and 35b.

According to this embodiment, as hereinabove described, the diodes 35a and 35b having the cathode sides connected to the remote controller sensor 36 are provided, and the electrolytic capacitor 34 is provided between the diodes 35a and 35b and the remote controller sensor 36. Thus, the remote controller sensor 36 can reliably receive the power stored in the electrolytic capacitor 34.

According to this embodiment, as hereinabove described, the voltage value of the current flowing from the AC-DC converter 32a to the control portion 37 is larger than the voltage value of the current flowing from the connection portion 31 to the control portion 37. Thus, the control portion 37 can preferentially receive the power supplied from the AC power supply in the case where power is supplied from both the AC-DC converter 32a and the connection portion 31 to the control portion 37, and hence the control portion 37 can stably operate.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the video system is constituted by the BD player (recorder) and the TV (display) in the aforementioned embodiment, the present invention is not restricted to this. According to the present invention, the video system may alternatively be constituted by a recorder other than the BD player and a display other than the TV.

While the TV is applied as the example of the electronic device according to the present invention in the aforementioned embodiment, the present invention is not restricted to this. The present invention may alternatively be applied to an electronic device other than the TV. For example, the present invention may alternatively be applied to an AV (audio-visual) amplifier or the like.

While the single TV as the display according to the present invention is connected to the BD player in the aforementioned embodiment, the present invention is not restricted to this. According to the present invention, two or more displays may alternatively be connected to the recorder so far as the recorder is connectable to the two or more displays. Thus, in the video system including a plurality of displays according to the present invention, power can be more effectively saved while stoppage of all functions of control portions of the plurality of displays is prevented even in the standby state.

While the electric storage portion according to the present invention includes the electrolytic capacitor in the aforementioned embodiment, the present invention is not restricted to this. According to the present invention, the electric storage portion may alternatively include a secondary battery or the like capable of storing DC power, for example, other than the electrolytic capacitor.

While the power supply circuit portion including both the AC-DC converter as the AC-DC conversion portion according to the present invention and the DC-DC converter as the transformation portion according to the present invention is provided in the aforementioned embodiment, the present invention is not restricted to this. According to the present invention, the AC-DC conversion portion and the transformation portion may alternatively be provided separately instead of the power supply circuit portion including both the AC-DC conversion portion and the transformation portion.

While the HDMI cable is applied as the example of the prescribed cable capable of transmitting audio data, video data, a control signal, and power according to the present invention in the aforementioned embodiment, the present invention is not restricted to this. According to the present invention, a cable other than the HDMI cable may alternatively be applied so far as the cable can transmit power.

While the remote controller sensor as the signal receiving portion according to the present invention receives the power through the AC-DC converter as the AC-DC conversion portion according to the present invention when the remote controller sensor does not receive the DC power from the BD player as the recorder according to the present invention in the standby state in the aforementioned embodiment, the present invention is not restricted to this. According to the present invention, the signal receiving portion may alternatively receive the power through the AC-DC conversion portion also when the signal receiving portion receives the DC power from the recorder in the standby state.

While processing operations of the control portion are described, using the flowcharts described in an event-driven manner at the start and described in a flow-driven manner after the start for the convenience of illustration in the aforementioned embodiment, the present invention is not restricted to this. The processing operations of the control portion may alternatively be performed in a complete event-driven manner, in a complete flow-driven manner, or in a parallel processing manner.

## Claims

1. An electronic device (3) comprising:
a control portion (37) receiving DC power through an AC-DC conversion portion (32a) from an AC power supply; and
a connection portion (31) connected to an external device (2) in a state where the connection portion can receive DC power from the external device, wherein
the control portion is configured to perform control of stopping receiving of the DC power received by the control portion through the AC-DC conversion portion from the AC power supply when the control portion receives DC power from the external device through the connection portion in a standby state.

2. The electronic device according to claim 1, wherein
the control portion is configured to perform control of restarting receiving of the DC power received by the control portion through the AC-DC conversion portion from the AC power supply when receiving of the DC power from the external device is stopped in the standby state.

3. The electronic device according to claim 2, further comprising an electric storage portion (34) capable of storing the DC power received from the external device through the connection portion, wherein
the control portion is configured to continue to operate with the DC power stored in the electric storage portion during a period from a time point when receiving of the DC power from the external device is stopped to a time point when receiving of the DC power received by the control portion through the AC-DC conversion portion from the AC power supply is restarted in the standby state.

4. The electronic device according to claim 1, further comprising a changeover switch (33) provided between the AC power supply and the AC-DC conversion portion, switching between disconnection and connection of a receiving path for the DC power received by the control portion through the AC-DC conversion portion from the AC power supply, wherein
the control portion is configured to perform control of switching the changeover switch so as to disconnect the receiving path for the DC power received by the control portion through the AC-DC conversion portion from the AC power supply when the control portion receives the DC power from the external device.

5. The electronic device according to claim 1, further comprising a signal receiving portion (36) receiving DC power through the AC-DC conversion portion from the AC power supply, capable of receiving a signal from a remote controller, wherein
the control portion is configured to perform control of stopping receiving of the DC power received by the control portion and the signal receiving portion through the AC-DC conversion portion from the AC power supply when the control portion and the signal receiving portion receive the DC power from the external device through the connection portion in the standby state.

6. The electronic device according to claim 1, wherein
the control portion is configured to continue at least time-related control with the DC power received from the external device when the control portion receives the DC power from the external device through the connection portion in the standby state.

7. The electronic device according to claim 1, further comprising a transformation portion (32b) provided between the AC power supply and the control portion, transforming a DC voltage, wherein
the control portion is configured to perform control of stopping receiving of the DC power received by the control portion through the transformation portion from the AC power supply when the control portion receives the DC power from the external device through the connection portion in the standby state.

8. The electronic device according to claim 7, wherein
the AC-DC conversion portion and the transformation portion are arranged in series to configure a power supply circuit portion (32),
the power supply circuit portion is provided between the AC power supply and the control portion, and
the control portion is configured to perform control of stopping receiving of the DC power received by the control portion through the power supply circuit portion from the AC power supply when the control portion receives the DC power from the external device through the connection portion in the standby state.

9. The electronic device according to claim 1, wherein
the connection portion connectable to the external device is configured to be connected by a prescribed cable capable of transmitting audio data, video data, a control signal, and power and to comply with an interface standard allowing mutual control between devices based on the control signal.

10. The electronic device according to claim 9, wherein
the connection portion is configured to comply with an HDMI standard as the interface standard.

11. The electronic device according to claim 1, wherein
the control portion includes a port connected to the connection portion through a wire and is configured to determine that the control portion receives the DC power from the external device by detecting that the DC power is supplied to the port.

12. The electronic device according to claim 3, further comprising a diode (35a, 35b) having a cathode side connected to the control portion, wherein
a capacitor constituting the electric storage portion is arranged between the diode and the control portion.

13. The electronic device according to claim 12, wherein
the diode includes a first diode (35a) and a second diode (35b),
the first diode is arranged between the connection portion and the control portion,
the second diode is arranged between the AC-DC conversion portion and the control portion, and
the first diode and the second diode both have cathode sides connected to the control portion.

14. The electronic device according to claim 5, further comprising an electric storage portion capable of storing the DC power received from the external device through the connection portion and a diode having a cathode side connected to the control portion, wherein
the cathode side of the diode is connected to the signal receiving portion, and
a capacitor constituting the electric storage portion is arranged between the diode and the signal receiving portion.

15. The electronic device according to claim 1, wherein
a voltage value of a current flowing from the AC-DC conversion portion to the control portion is larger than a voltage value of a current flowing from the connection portion to the control portion.
